**Europäisches Patentamt**

**European Patent Office**

**Office européen des brevets**

(19)

(11) Numéro de publication : **0 493 178 A1**

(12) # DEMANDE DE BREVET EUROPEEN

(21) Numéro de dépôt : **91403390.7**

(22) Date de dépôt : **13.12.91**

(51) Int. Cl.$^5$ : **G09G 3/36**

(30) Priorité : **21.12.90 FR 9016129**

(43) Date de publication de la demande :
**01.07.92 Bulletin 92/27**

(84) Etats contractants désignés :
**DE FR GB NL**

(71) Demandeur : **THOMSON-LCD**
**51, Esplanade du Géneral de Gaulle**
**F-92800 Puteaux (FR)**

(72) Inventeur : **Royer, Pascal**
**THOMSON-CSF, SCPI, Cédex 67**
**F-92045 Paris la Défense (FR)**
Inventeur : **Hepp, Bernard**
**THOMSON-CSF, SCPI, Cédex 67**
**F-92045 Paris la Défense (FR)**
Inventeur : **Mourey, Bruno**
**THOMSON-CSF, SCPI, Cédex 67**
**F-92045 Paris la Défense (FR)**

(74) Mandataire : **Ruellan-Lemonnier, Brigitte et al**
**THOMSON-CSF SCPI**
**F-92045 PARIS LA DEFENSE CEDEX 67 (FR)**

(54) **Ecran matriciel couleur à filtres colorés en triade.**

(57) La présente invention concerne les écrans matriciels couleurs à filtres colorés en triade. Dans ce cas, les points-image sont constitués de deux sous-points-image adjacents qui sont alignés selon les lignes et les colonnes de la matrice, les filtres colorés des lignes n (l1, l3,) (n pouvant être pair ou impair) étant agencés selon la séquence A,A, B,B, C,C et les filtres colorés des lignes n + 1 (l2) étant agencés selon la séquence C,C, A,A, B,B où A, B, C est une combinaison quelconque de Rouge, Vert, Bleu avec décalage d'un sous-point-image à chaque extrémité de la ligne et en ce que chaque colonne (C1, C2, ...) est constituée par deux éléments (c1, c'1 ; c2, c'2, ...) de colonne parallèles reliés entre eux à chaque extrémité, deux sous-points-image adjacents d'une ligne ayant des filtres colorés de même couleur étant connectés chacun à un élément de colonne différent.
Application aux écrans à cristaux liquides.

FIG.2

EP 0 493 178 A1

La présente invention concerne les écrans matriciels couleurs à filtres colorés en triade, plus particulièrement les écrans matriciels de grandes dimensions, notamment les écrans matriciels compatibles avec un affichage de type télévision.

De manière connue, un écran matriciel est constitué de deux réseaux conducteurs orthogonaux appelés ligne et colonne, chaque intersection d'une ligne et d'une colonne formant un point-image. Pour obtenir un affichage couleur, on superpose à ces points-image une mosaïque de filtres colorés Rouge, Vert et Bleu, chaque filtre étant en regard d'un point-image.

Différentes dispositions peuvent être utilisées pour agencer les filtres colorés de manière à obtenir en sortie la couleur désirée. Parmi ces dispositions, on connaît notamment la disposition en triade selon laquelle la couleur est obtenue en utilisant des points-image uniquement Rouge, Bleu, Vert disposés selon un triangle.

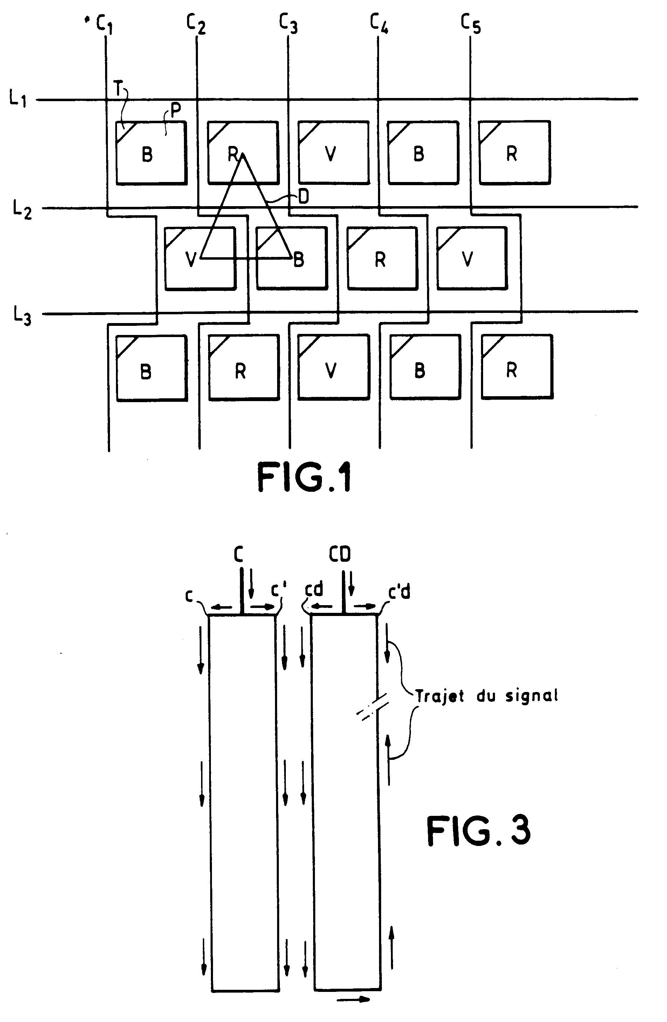

Comme représenté sur la figure 1, les écrans matriciels couleurs à filtres colorés en triade actuellement réalisés sont constitués essentiellement par un certain nombre de lignes parallèles L1, L2, ..., par un certain nombre de colonnes C1, C2, C3, C4, C5, ... et par des points-image P réalisés à l'intersection des colonnes C1, C2, ... et des lignes L1, L2, ... Pour obtenir un écran couleur, des filtres colorés sont associés à chaque point-image P. Du fait de leur disposition en triade, les filtres colorés des lignes impaires à savoir L1 et L3, sont agencés selon la séquence Bleu, Rouge, Vert tandis que les filtres colorés des lignes paires L2, ... sont agencés selon la séquence Vert, Bleu, Rouge. Pour obtenir une disposition en triade, il est nécessaire de décaler les lignes paires, dans le mode de réalisation représenté, d'un demi point-image de telle sorte que les centres des points-image associés Rouge, Vert et Bleu soient aux sommets d'un triangle isocèle, comme représenté par le triangle D sur la figure 1. D'autre part, dans le cadre de la figure 1, on a représenté un écran à matrice active. Dans ce cas, les points-image sont constitués par des éléments électro-optiques tels qu'un cristal liquide et ils sont connectés à la ligne et à la colonne correspondantes par l'intermédiaire d'un transistor T symbolisé, de manière conventionnelle, par un simple trait placé près de l'intersection du conducteur de ligne et du conducteur de colonne considérés. Ces transistors sont avantageusement des transistors TFT (pour Thin Film Transistors en langue anglaise) et sont fabriqués de façon habituelle. Comme représenté sur la figure 1, à cause du décalage des points-image d'une ligne à la suivante permettant d'obtenir la disposition en triade, les colonnes ne sont plus parallèles entre elles, mais doivent être décalées d'un demi point-image toutes les deux lignes, comme représenté sur la figure 1. De ce fait, le trajet des colonnes est très important, ce qui pose un certain nombre de problèmes au niveau de l'adressage de la technologie de fabrication et de la conception. Toutefois, un arrangement des filtres colorés en triade permet d'obtenir une meilleure reconstitution de la couleur au niveau de l'affichage par rapport à d'autres dispositions de filtres colorés permettant de maintenir les colonnes parallèles.

La présente invention a donc pour but de proposer une nouvelle structure des filtres colorés permettant d'avoir une disposition en triade tout en remédiant aux problèmes rencontrés dans les écrans matriciels couleurs à filtres colorés en triade de l'art antérieur.

En conséquence, la présente invention a pour objet un écran matriciel couleur à filtres colorés en triade, caractérisé en ce que les points-image sont constitués de deux sous -points -image adjacents qui sont alignés selon les lignes et les colonnes de la matrice, les filtres colorés des lignes n (n pouvant être pair ou impair) étant agencés selon la séquence A,A, B,B, C,C et les filtres colorés des lignes n + 1 étant agencés selon la séquence C, C, A,A, B,B où A,B,C est une combinaison quelconque de Rouge, Vert, Bleu avec décalage d'un sous-point-image à chaque extrémité de la ligne et en ce que chaque colonne est constituée par deux éléments de colonne parallèles reliés entre eux à chaque extrémité, deux sous-points-image adjacents d'une ligne ayant des filtres colorés de même couleur étant connectés chacun à un élément de colonne différent.

Selon une autre caractéristique de la présente invention, utile principalement pour les écrans matriciels couleurs utilisés dans un système de type télévision, chaque sous-point-image présente un rapport $x/y = 2/3$, x étant la dimension du sous-point-image selon les lignes et y selon les colonnes.

D'autres caractéristiques et avantages de la présente invention apparaîtront à la lecture de la description faite ci-après d'un mode de réalisation préférentiel de la présente invention, cette description étant faite avec référence aux dessins ci-annexés dans lesquels :

    – la figure 1, déjà décrite, est une représentation schématique et partielle d'un écran matriciel couleur à filtres colorés en triade selon l'art antérieur ;

    – la figure 2 est une représentation schématique et partielle d'un écran matriciel couleur à filtres colorés en triade selon la présente invention, et

    – la figure 3 est un schéma explicatif.

La présente invention sera décrite en se référant à un écran du type à matrice active dans lequel l'élément électro-optique est constitué par un crital liquide et l'élément de commutation par un transistor. Toutefois, il est évident pour l'homme de l'art que la présente invention peut être mise en oeuvre avec des écrans matriciels dans lesquels l'élément électro-optique fait appel à des technologies autres que les cristaux liquides et dans lesquels l'élément de commutation peut être constitué par une diode ou similaire. La présente invention peut aussi s'appliquer à d'autres types d'écrans matriciels.

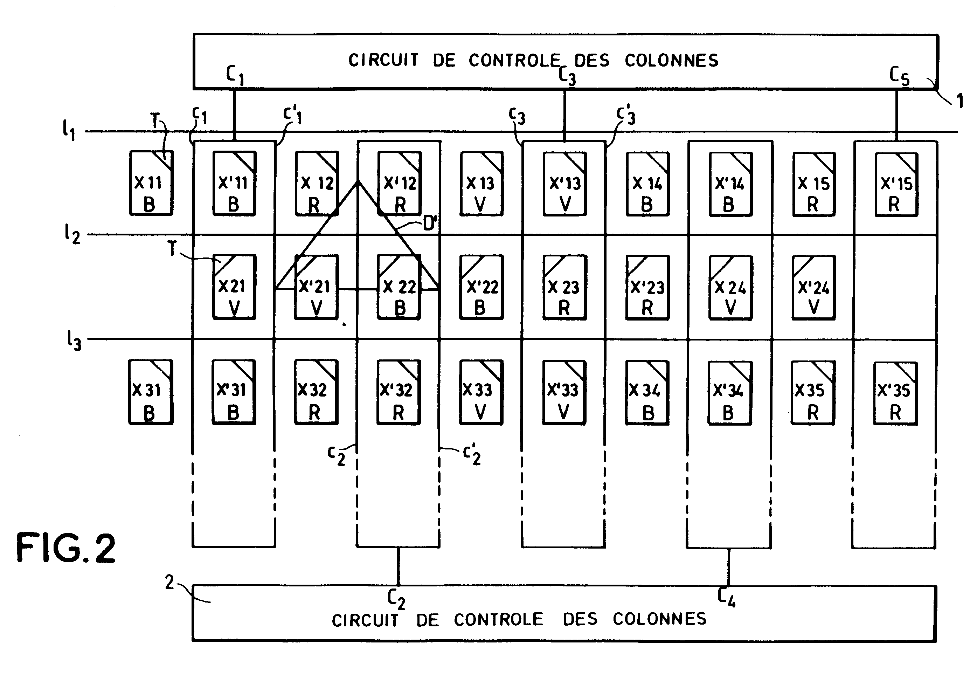

Comme représenté sur la figure 2, l'écran comporte essentiellement une matrice de conducteurs de lignes l1, l2, l3, ..., et de conducteurs de colonnes C1, C2, C3, ... Conformément à la présente invention et comme représenté sur le dessin, les conducteurs de colonnes C1, C2, C3 sont constitués chacun par deux éléments de colonnes c1, c'1, c2, c'2, c3, c'3, ..., parallèles connectés entre eux à chaque extrémité.

Chacune des "cases" délimitée par deux conducteurs de lignes voisins et deux conducteurs d'éléments de colonnes voisins comporte une cellule de cristal liquide. Ces cellules sont respectivement référencées X1.1, X'1.1, X1.2, X'1.2, X1.3, X'1.3, X1.4, X'1.4, X1.5, X'1.5 ... pour la première ligne de cellules, à savoir les cellules comprises entre les conducteurs de lignes l1, l2. Les cellules de la deuxième ligne, à savoir les cellules comprises entre l2 et l3 sont référencées X2.1, X'2.1, X2.2, X'2.2, X2.3, X'2.3, X2.4, X'2.4 et ainsi de suite pour les autres cellules.

De manière connue, chaque cellule est constituée par un cristal liquide monté en série avec un transistor T. Conformément à la présente invention, des filtres colorés sont associés à chaque cellule $Xi.i$, $X'i.i$ selon une disposition en triade. De manière plus spécifique, les filtres Bleu sont superposés aux cellules X1.1, X'1.1., X1.4, X'1.4 de la première ligne, aux cellules X2.2, X'2.2. de la deuxième ligne et aux cellules X3.1, X'3.1, X3.4, X'3.4 de la troisième ligne. D'autre part, les filtres Rouge sont superposés aux cellules X1.2, X'1.2, X1.5, X'1.5 de la première ligne, aux cellules X2.3, X'2.3 de la seconde ligne et aux cellules X3.2, X'3.2, X3.5, X'3.5 de la troisième ligne. Les filtres Vert sont donc superposés aux cellules X1.3, X'1.3 de la première ligne, aux cellules X2.1, X'2.1, X2.4, X'2.4 de la deuxième ligne, aux cellules X3.3, X'3.3. de la troisième ligne. De ce fait, les filtres colorés sont agencés selon des séquences A,A, B,B, C,C, à savoir Bleu-Bleu, Rouge-Rouge, Vert-Vert pour des lignes n, n pouvant être pair ou impair, et selon des séquences C,C, A,A, B,B, à savoir Ver-Vert, Bleu-Bleu, Rouge-Rouge pour les lignes n+1. D'autre part, conformément à la présente invention et comme représenté sur la figure 2, on observe un décalage d'un point-image à chaque extrémité des lignes n+1. En effet, le premier point-image X2.1 de la deuxième ligne est aligné avec les points-image X'1.1 ou X'3.1 des lignes l1 et l3, comme représenté sur la figure 2.

Selon l'invention, les points- image adjacents d'une ligne ayant des filtres colorés de même couleur sont connectés chacun à un élément de colonne différent. Ainsi, comme représenté sur le dessin, la cellule X1.1 est connectée par le transistor T représenté par un simple trait à l'élément colonne c1 tandis que la cellule X'1.1 est connectée à l'élément de colonne c'1. De même, la cellule X1.2 est connectée à l'élément de colonne c2 et la cellule X'1.2 est connectée à l'élément de colonne c'2. Pour la ligne l2, on voit que la cellule X2.1 est connectée par le transistor T à l'élément de colonne c1 et la cellule X'2.1 est elle connectée à l'élément de colonne c'1. Et ainsi de suite pour l'ensemble des différentes cellules.

L'utilisation d'un conducteur de colonne C1, C2, C3, C4, C5 réalisée par deux éléments de colonnes c1, c'1 ou c2, c'2, ... parallèles présente un certain nombre d'avantages. On s'aperçoit en examinant la figure que chaque point-image est en fait commandé par deux éléments de colonne, ce qui élimine les risques de non fonctionnement en cas de coupure au niveau d'un élément de colonne. En effet, dans ce cas, le point-image est commandé par l'autre élément de colonne, même si la commande est retardée. Ceci est représenté schématiquement sur la figure 3. Sur cette figure, la colonne C comporte deux éléments de colonne c,c' sans défaut, et le trajet du signal symbolisé par une flèche se sépare en deux tandis que la colonne CD comporte un élément de colonne c'd présentant une coupure, l'autre élément cd étant sans défaut. Dans ce cas, le trajet du signal est celui représenté par les flèches. D'autre part, on obtient une structure dans laquelle les points-image sont alignés selon les lignes et selon les colonnes, ce qui facilite leur réalisation ainsi que la réalisation des conducteurs qui eux aussi sont alignés. De plus, les colonnes peuvent être réalisées avec une largeur inférieure à celle des colonnes de la figure 1 et les transistors peuvent aussi être moins gros. En conséquence, cette solution ne va pas au détriment du facteur d'ouverture même si le nombre de points-image a été augmenté pour une dimension d'écran donnée. D'autre part, avec ce type d'écran on obtient toujours une disposition en triade, comme représenté par le triangle D' sur la figure 2, avec tous les avantages qui en résultent.

De plus, la structure en double colonne est tout à fait "transparente" du point de vue adressage de sorte que l'utilisation de cette structure ne modifie en rien la méthode d'adressage de l'écran.

L'écran matriciel couleur à filtres colorés représenté sur la figure 2 sera, de préférence, utilisé comme écran de télévision. De ce fait, étant donné le format d'affichage actuel en télévision qui est un format 4/3, les points-image présentent, de préférence, des dimensions x/y sensiblement égales à 4/3. De préférence, ces dimensions x/y seront sensiblement égalee à 2/3, x étant la dimension du point-image selon les lignes et y selon les colonnes. A titre d'exemple, dans l'art antérieur, un point-image présente une dimension de 284μm x 212 μm, alors qu'un point-image pour un écran matriciel conforme à la présente invention peut être réalisé avec une dimension de 142μm x 212μm.

Selon une caractéristique de la présente invention, l'adressage des colonnes peut être un adressage interdigité, à savoir les colonnes impaires telles que C1, C3, C5 sont reliées à un premier circuit de commande 1 tandis que les colonnes paires C2, C4 sont reliées à un second circuit de commande 2. Il peut aussi être non-interdigité (toutes les colonnes sort adressées à un circuit de commande 1 situé à une des extrémités de la colonne) ou non-interdigité redondant (toutes les colonnes sont adressées à deux circuits de commande 1 et 2 à chacune des extrémités de la colonne). L'adressage ligne peut être lui réalisé de manière connue en utilisant un adressage progessif. Toutefois, il est évident pour l'homme de l'art que d'autres types d'adressage peuvent être utilisés de manière à retrouver un signal couleur.

## Revendications

1. Ecran matriciel couleur à filtres colorés en triade, caractérisé en ce que les points-image sont constitués de deux sous-points-image adjacents qui sont alignés selon les lignes et les colonnes de la matrice, les filtres colorés des lignes n (l1, l3,) (n pouvant être pair ou impair) étant agencés selon la séquence A,A, B,B, C,C et les filtres colorés des lignes n + 1 (l2) étant agencés selon la séquence C,C, A,A, B,B où A, B, C est une combinaison quelconque de Rouge, Vert, Bleu avec décalage d'un sous-point-image à chaque extrémité de la ligne et en ce que chaque colonne (C1, C2, ...) est constituée par deux éléments (c1, c'1 ; c2, c'2, ...) de colonne parallèles reliés entre eux à chaque extrémité, deux sous-points-image adjacents d'une ligne ayant des filtres colorés de même couleur étant connectés chacun à un élément de colonne différent.

2. Ecran matriciel selon la revendication 1, caractérisé en ce que chaque sous-point-image présente un rapport $x/y = 2/3$, x étant la dimension du sous-point-image selon les lignes et y selon les colonnes.

3. Ecran matriciel selon l'une quelconque des revendications 1 et 2, caractérisé en ce que les colonne paires sont connectées à un premier circuit de commande et les colonnes impaires à un second circuit de commande de manière à réaliser un adressage interdigité.

4. Ecran matriciel selon l'une quelconque des revendications 1 à 3, caractérisé en ce que l'adressage lignes est un adressage progressif.

5. Ecran matriciel selon l'une quelconque des revendications 1 à 4, caractérisé en ce que chaque sous-point-image est commandé par un élément de commutation.

FIG.1

Trajet du signal

FIG.3

CIRCUIT DE CONTROLE DES COLONNES

CIRCUIT DE CONTROLE DES COLONNES

FIG.2

EP 0 493 178 A1

**Office européen des brevets**

# RAPPORT DE RECHERCHE EUROPEENNE

Numero de la demande

EP 91 40 3390

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | EP-A-0 158 366 (SHARP K.K.) 16 Octobre 1985 | 1 | G09G3/36 |
| A | * abrégé * | 5 | |
| | * page 26, ligne 8 - page 27, ligne 25; figures 6A-C * | | |
| | --- | | |
| Y | WO-A-8 805 170 (ALPHASIL., INC) 14 Juillet 1988 | 1 | |
| A | * abrégé; figure 4 * | 3-5 | |
| | * page 2, ligne 30 - ligne 32 * | | |
| | * page 3, ligne 27 - page 4, ligne 7 * | | |
| | * page 11, ligne 11 - page 12, ligne 34 * | | |
| | ----- | | |

| | | | DOMAINES TECHNIQUES RECHERCHES (Int. Cl.5) |
|---|---|---|---|
| | | | G09G G02F |

Le présent rapport a été établi pour toutes les revendications

| Lieu de la recherche | Date d'achèvement de la recherche | Examinateur |
|---|---|---|
| LA HAYE | 04 FEVRIER 1992 | ZENDER J.J. |